# EUROPÄISCHE PATENTANMELDUNG

(11) **EP 1 319 583 A1**
(43) Veröffentlichungstag der Anmeldung: **18.06.2003**
(21) Anmeldenummer: 01811227.6
(22) Anmeldetag: 13.12.2001
(51) Int. Cl.: B62D 31/02, B62D 65/00

(54) **Autobus mit einem Wagenkasten aus einer selbsttragenden Gerippestruktur**

(71) Anmelder: Alcan Technology & Management AG, 8212 Neuhausen am Rheinfall (CH)
(72) Erfinder: Waldeck, Klaus-Dieter, 8954 Geroldswil (CH); Dallo, Gino, 5600 Lenzburg (CH); Dobberstein, Tilo, 8057 Zürich (CH)

(57) **Zusammenfassung**

Bei einem Autobus mit einem Wagenkasten aus einer selbsttragenden Gerippestruktur (10) und einer unter einem Fahrgastboden (38) angeordneten Antriebseinheit (20) ist ein über der Antriebseinheit (20) liegender Teil des Fahrgastbodens (38) als separates und strukturell tragendes Bodenmodul (22) ausgebildet. Das Bodenmodul (22) ist nach dem Einbau der Antriebseinheit (20) in die Gerippestruktur (10) einsetzbar.

Das nach dem Einbau der Antriebseinheit in die Gerippestruktur einsetzbare Bodenmodul ermöglicht den Einbau der Antriebseinheit von oben. Zudem kann das Bodenmodul bereits mit Wärme- und Schallschutzmatten vorgefertigt werden.

## Beschreibung

Die Erfindung betrifft einen Autobus mit einem Wagenkasten aus einer selbsttragenden Gerippestruktur und einer unter einem Fahrgastboden angeordneten Antriebseinheit.

Bekannte selbsttragende Gerippestrukturen von Autobussen bestehen beispielsweise aus miteinander verschweissten oder verschraubten Profilen aus Stahl oder Aluminium. Insbesondere bei Reisebussen ist wegen dem erforderlichen Gepäckraum der Fahrgastboden erhöht angeordnet. In diesem Fall befindet sich die Antriebseinheit unterhalb des Fahrgastbodens.

Bei den heute üblichen Autobussen in Integral-Gerippebauweise ist zur Bildung des Bodens über der Antriebseinheit bzw. über dem Motorraum üblicherweise ein Stahlblech in die Gerippestruktur eingeschweisst. Vor dem Einbau der Antriebseinheit wird am fertiggestellten Gerippe die Wärme- und Schalldämmung im Motorraum vorgenommen. Da das Gerippe bei dieser Arbeit üblicherweise nicht gewendet wird, muss die Montage zeitaufwendig über dem Kopf erfolgen.

Wegen der stark eingeschränkten Zugänglichkeit des Motorraumes von oben wird der Einbau und die Installation der Antriebseinheit in den fertig isolierten Rohbau erheblich erschwert. Andererseits lassen sich Schall- und Wärmebrükken beim nachträglichen Einbau der Wärme- und Schalldämmatten in die Gerippestruktur nur mit erheblichem Zusatzaufwand vermeiden.

Der Erfindung liegt die Aufgabe zugrunde, bei einem Autobus der eingangs genannten Art den Einbau der Antriebseinheit zu vereinfachen und gleichzeitig die Schall- und Wärmedämmeigenschaften der Motorraumabdeckung zu verbessern.

Zur erfindungsgemässen Lösung der Aufgabe führt, dass ein über der Antriebseinheit liegender Teil des Fahrgastbodens als separates und strukturell tragendes Bodenmodul ausgebildet ist, wobei das Bodenmodul nach dem Einbau der Antriebseinheit in die Gerippestruktur einsetzbar ist.

Mit dem nachträglich in die Gerippestruktur einsetzbaren Bodenmodul kann der Einbau der Antriebseinheit von oben erfolgen, was die Einbauarbeiten erheblich erleichtert. Zudem kann das Bodenmodul gewichtsoptimiert hergestellt werden, bei gleichzeitiger Verbesserung der Schall- und Wärmedämmeigenschaften. Zudem führt die Vorfertigung des Moduls zu einer erheblichen Verkürzung der Montagezeit.

Im Bodenmodul können alle Elemente zur thermischen und akustischen Isolation integriert sein. Ebenso ist es möglich, im Bodenmodul Befestigungselemente wie z.B. Montageschienen zum Befestigen von Fahrgastsitzen anzuordnen.

Das Bodenmodul kann mit einer Wartungsöffnung für die Antriebseinheit versehen sein.

Bei einer Anordnung der Antriebseinheit im Fahrzeugheck kann das Bodenmodul bei einer besonders bevorzugten Ausführungsform mit einem separaten und strukturell tragenden Heckwandelement verbunden sein. Hierbei ist das Heckwandelement nach dem Einbau der Antriebseinheit und nach dem Einsetzen des Bodenmoduls in die Gerippestruktur einsetzbar.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- Fig. 1 die Heckansicht einer Gerippestruktur nach dem Stand der Technik;
- Fig. 2 die Heckansicht einer erfindungsgemässen Gerippestruktur;
- Fig. 3 die Draufsicht auf ein Bodenmodul;
- Fig. 4 den Querschnitt durch das Bodenmodul von Fig. 3 nach deren Linie I - I;
- Fig. 5 die Seitenansicht des Heckteils einer erfindungsgemässen Gerippestruktur mit eingesetztem Bodenteil.

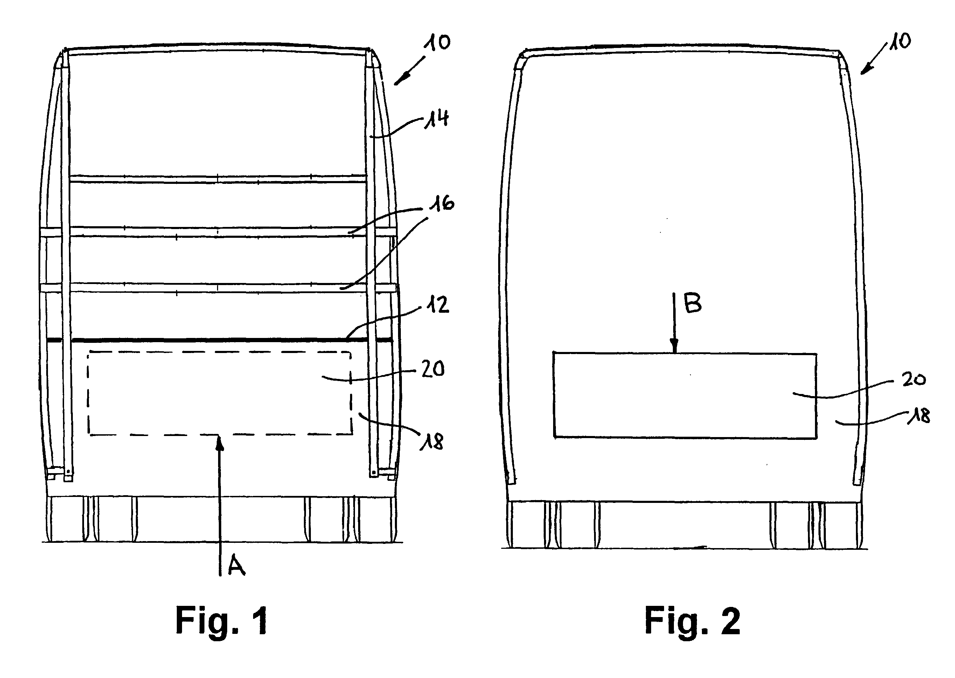

Eine in Fig. 1 und 2 dargestellte Gerippestruktur 10 eines Autobusses ist beispielsweise aus miteinander verschweissten oder verschraubten Stahl- oder Aluminiumprofilen aufgebaut. Nachdem das Gittergerüst fertiggestellt ist, werden Seitenwandbleche, Kofferraumklappen, Dach und ggf. Heck montiert

Bei der in Fig. 1 dargestellten Gerippestruktur 10 nach dem Stand der Technik ist über einem Motorraum 18 in Fussbodenhöhe ein Motorraum-Abdeckblech 12 mit der Gerippestruktur verschweisst. Die Wärme- und Schallisolierung dieses Motorraum-Abdeckbleches 12 muss deshalb am fertiggestellten Gerippe von unten erfolgen. Ebenso ist der Einbau einer Antriebseinheit 20 praktisch nur von unten her in Pfeilrichtung A möglich.

Bei der in Fig. 2 dargestellten Ausführungsform einer Gerippestruktur 10 ist über dem Motorraum 18 kein Motorraum-Abdeckblech eingeschweisst. Die Antriebseinheit 20 kann daher von oben in Pfeilrichtung B eingebaut werden. Bei dieser Ausführungsform sind zudem im Vergleich zur Gerippestruktur von Fig. 1 keine Eckpfostenprofile 14 und auch keine Heckwandprofile 16 vorhanden. Dadurch wird der Einbau der Antriebseinheit 20 von der Heckseite her zusätzlich erleichtert.

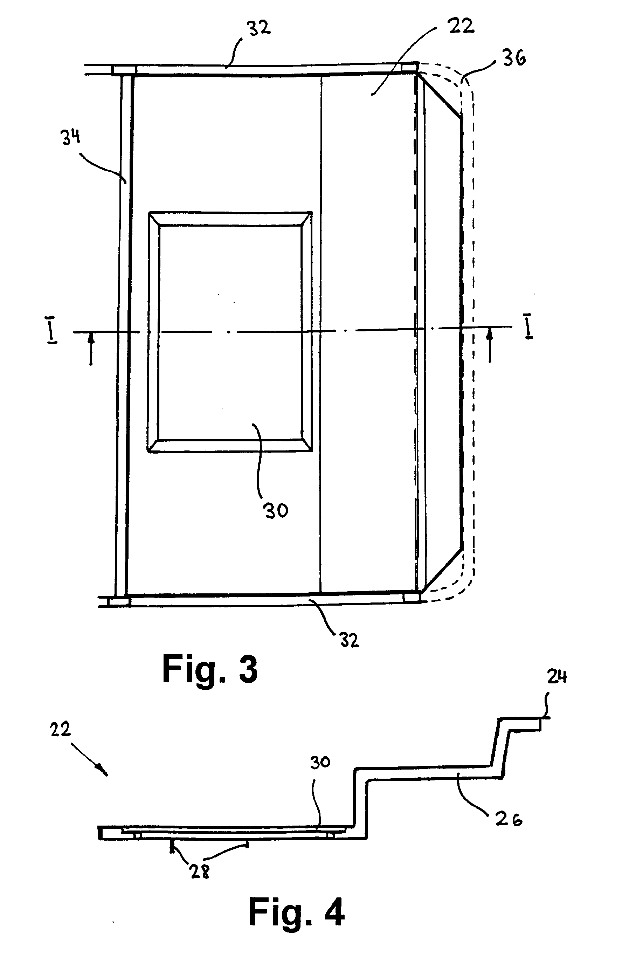

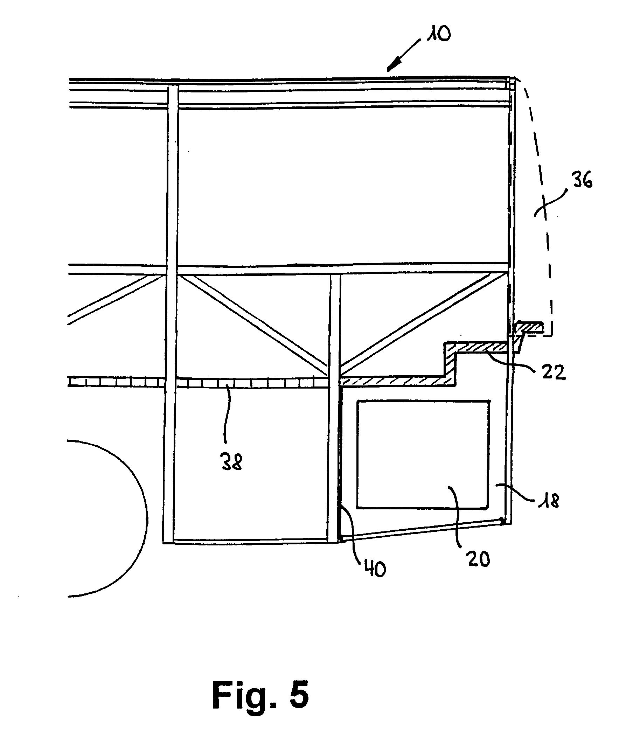

Ein in den Figuren 3 bis 5 gezeigtes, gestuft ausgebildetes Bodenmodul 22 besteht aus längs- und querlaufenden Profilen 26, welche mit einem Blech, mit einer Holzplatte oder mit einem Sandwichmaterial, z.B. mit einem beidseitig mit metallischen Deckschichten beplankten Kunststoffkern, als Trittfläche überdeckt sind. Auf der gegen den Motorraum 18 gerichteten Seite des Bodenmoduls 22 sind Befestigungselemente 28 für Wärme- und Schalldämmatten sowie für Elemente, die zur Antriebseinheit 20 gehören, angeordnet.

Auf der gegen den Fahrgastraum gerichteten Seite des Bodenmoduls 22 sind z.B. Montageschienen zur Befestigung von Fahrgastsitzen angeordnet.

Nach dem Einbau der Antriebseinheit 20 in den Motorraum 18 wird das Bodenmodul 22 in die Gitterstruktur eingesetzt und mit dieser verbunden. Das Verbindungsverfahren richtet sich nach der Art der gewählten Werkstoffe. Übliche Verbindungen sind beispielsweise Schweissen, Nieten, Schrauben und Kleben.

Bei der hier dargestellten Ausführungsform ist das Bodenmodul 22 mit zwei längslaufenden Seitenwandprofilen 32 und einem Querträgerprofil 34 verschraubt. Das Querträgerprofil 34 bildet hier zugleich den oberen Abschluss einer senkrecht stehenden Motorraumrückwand 40.

Damit der Motorraum 18 auch nach dem Einbau des Bodenmoduls 22 zugänglich bleibt, weist das Bodenmodul 22 eine Wartungsöffnung auf, die mit einem Deckel 30 verschliessbar ist.

Im eingebauten Zustand fluchtet das Bodenmodul 22 mit dem vor dem Motorraum 18 liegenden, mit der Gerippestruktur 10 fest verbundenen Fahrgastboden 38.

Heckseitig ist das Bodenmodul 22 mit einem Heckwandelement 36 verbunden. Dieses Heckwandelement 36 besteht beispielsweise aus glasfaserverstärktem Kunststoff oder aus einem beidseitig mit Kunststoff- oder Metalldeckschichten beplankten Hartschaumstoffkern und erstreckt sich über die gesamte Breite des Hecks von der Dachkante bis etwa auf die Höhe des Bodenmoduls22.

Das Heckwandelement 36 wird nach dem Einbau des Bodenmoduls 22 eingebaut und beispielsweise mit dem Bodenmodul 22 verklebt.

## Patentansprüche

1. Autobus mit einem Wagenkasten aus einer selbsttragenden Gerippestruktur (10) und einer unter einem Fahrgastboden (38) angeordneten Antriebseinheit (20),
**dadurch gekennzeichnet, dass**
ein über der Antriebseinheit (20) liegender Teil des Fahrgastbodens (38) als separates und strukturell tragendes Bodenmodul (22) ausgebildet ist, wobei das Bodenmodul (22) nach dem Einbau der Antriebseinheit (20) in die Gerippestruktur (10) einsetzbar ist.

2. Autobus nach Anspruch 1, **dadurch gekennzeichnet, dass** das Bodenmodul (22) thermisch und akustisch isoliert ist.

3. Autobus nach Anspruch 1 oder 2, **dadurch gekennzeichnet, dass** das Bodenmodul (22) mit einer Wartungsöffnung versehen ist.

4. Autobus nach einem der Ansprüche 1 bis 3, **dadurch gekennzeichnet, dass** auf dem Bodenmodul (22) Fahrgastsitze befestigbar sind.

5. Autobus nach einem der Ansprüche 1 bis 4, **dadurch gekennzeichnet, dass** die Antriebseinheit (20) im Fahrzeugheck angeordnet ist und das Bodenmodul (22) mit einem separaten und strukturell tragenden Heckwandelement (36) verbunden ist.

6. Autobus nach Anspruch 5, **dadurch gekennzeichnet, dass** das Heckwandelement (36) nach dem Einbau der Antriebseinheit (20) und nach dem Einsetzen des Bodenmoduls (22) in die Gerippestruktur (10) einsetzbar ist.
